Europäisches Patentamt

European Patent Office

Office européen des brevets

(11) Numéro de publication: **0 304 375**
**A1**

## DEMANDE DE BREVET EUROPEEN

(21) Numéro de dépôt: 88402123.9

(22) Date de dépôt: 18.08.88

(51) Int. Cl.4: **H 05 B 37/02**

(30) Priorité: 21.08.87 FR 8711806

(43) Date de publication de la demande:
22.02.89 Bulletin 89/08

(84) Etats contractants désignés: **DE GB IT NL**

(71) Demandeur: **ETAT FRANCAIS représenté par le Ministre Délégué des Postes et Télécommunications (CENTRE NATIONAL D'ETUDES DES TELECOMMUNICATIONS) 38-40 rue du Général Leclerc F-92131 Issy-les-Moulineaux (FR)**

(72) Inventeur: **DeLahaye, Jean-Yves 14, Avenue Pasteur F-92170 Vanves (FR)**

(74) Mandataire: **Mongrédien, André et al c/o BREVATOME 25, rue de Ponthieu F-75008 Paris (FR)**

(54) Dispositif de commande de l'éclairage de locaux.

(57) Ce dispositif comprend un premier ensemble (100) constitué par une minuterie, un circuit de déclenchement, un bouton-poussoir (BP) et des contacts permettant d'enclencher la minuterie. Ce dispositif est caractérisé par le fait qu'il comprend un ensemble autonome (200) comprenant un détecteur de type pyroélectrique (30), un circuit d'alimentation (40) relié aux bornes (a, b) du circuit de déclenchement de la minuterie, un circuit électronique (50) permettant d'amplifier le signal délivré par le détecteur et de délivrer une impulsion de tension calibrée capable de commander un relais (60) qui ferme un contact (62) lequel est connecté en parallèle sur les bornes (a, b).

Application à l'éclairage de locaux dans des immeubles.

FIG. 2

**Description**

## DISPOSITIF DE COMMANDE DE L'ECLAIRAGE DE LOCAUX

La présente invention a pour objet un dispositif d'éclairage de locaux. L'invention perfectionne les installations électriques traditionnelles destinées à éclairer des locaux divers comme des paliers, des cages d'escaliers, des sous-sols, etc.

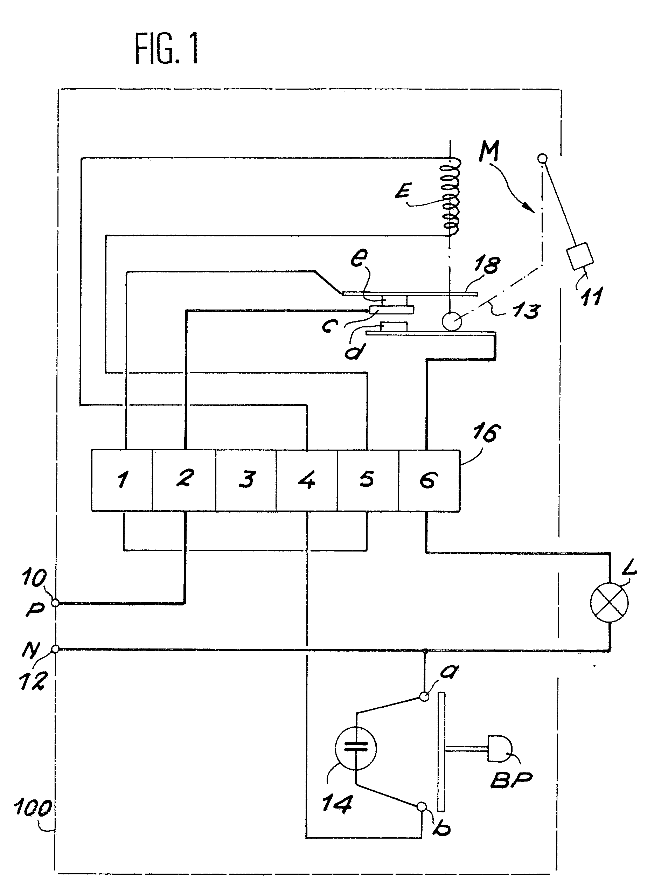

On connaît des dispositifs à commande manuelle qui fonctionnent à l'aide d'une minuterie et d'un bouton-poussoir. Une telle installation est représentée sur la figure 1 sous la référence générale 100. Elle comprend une minuterie M schématiquement symbolisée par un balancier 11 et par un bras 13 formant levier, cette minuterie étant associée à un enroulement E apte à attirer l'extrémité du levier 13 ; elle comprend encore un bouton-poussoir BP apte à établir un court-circuit entre deux plots a et b, un voyant lumineux 14, deux entrées d'alimentation 10 et 12 recevant, la première une phase P, la seconde le neutre N, des plots de contact c, d et e, et une lame souple 18.

L'ensemble comporte en outre une barrette 16 de plots de connexion référencés 1 à 6 qui permettent de faciliter l'interconnexion entre, d'une part, la partie supérieure qui comprend les contacts et la minuterie, et, d'autre part, la partie inférieure qui comprend essentiellement le bouton-poussoir et l'alimentation de la source L.

Le circuit de déclenchement de la minuterie comprend les éléments a, b, 4, E, 5, 1, e, c, 2. Ce circuit est alimenté par la tension d'alimentation (P, N) ; le bouton poussoir (BP) est apte à établir un court-circuit momentané entre les deux bornes (a, b) et à établir ainsi la continuité du circuit de déclenchement de la minuterie et la commande de celle-ci.

Les deux contacts e et c sont mis en circuit ouvert dès que la minuterie est déclenchée, ce qui interrompt la continuité du circuit de déclenchement de la minuterie ; ces contacts sont remis en circuit fermé à la fin de la période définie par la minuterie.

La lampe dont on veut commander l'éclairage se trouve alimentée par la tension NP, à travers un circuit qui comprend les éléments (6, d, c, 2). Ce circuit comprend les deux contacts c et d dont la position est commandée par la minuterie M ; ces contacts c et d sont fermés pendant la période définie par la minuterie, ce qui assure la commande de l'éclairage pendant cette période, et sont ouverts en dehors de cette période, ce qui interrompt l'éclairage et rétablit la tension d'alimentation entre les bornes (a, b).

Lorsqu'on veut provoquer la commande de la source lumineuse L, on appuie sur le bouton-poussoir BP, ce qui a pour effet de mettre en court-circuit les bornes a et b et d'établir la continuité électrique dans le circuit d'excitation de la minuterie. L'enroulement E étant parcouru par un courant, l'armature 13 de la minuterie est sollicitée vers le haut. La lame 18, qui est souple, est tirée vers le haut et le contact e vient s'écarter du contact c sur lequel il était en appui. Le circuit de déclenchement de la minuterie est ainsi interrompu. Par ailleurs, les contacts c et d ferment le circuit d'alimentation de la source L, laquelle se trouve alimentée par la tension appliquée aux bornes 10 et 12.

Après une période de temps T définie par la minuterie, le bras 13 libère la languette 18 et écarte l'un de l'autre les contacts c et d. Ceci a le double effet de rétablir la continuité du circuit de déclenchement de la minuterie et d'interrompre l'alimentation de la source L.

Si ce dispositif est aujourd'hui largement utilisé dans la plupart des immeubles, il présente cependant un inconvénient qui est le suivant. Lorsque l'éclairage s'éteint, il peut arriver qu'une personne soit encore dans le lieu précédemment éclairé et se trouve ainsi plongée brutalement dans l'obscurité. Cette extinction intempestive constitue un danger surtout pour les personnes âgées. Par ailleurs, le système à bouton-poussoir n'est guère commode losqu'on porte des paquets ou des objets encombrants.

C'est la raison pour laquelle il s'est développé récemment des dispositifs qui permettent de commander l'éclairage au moyen d'un détecteur de présence qui permet d'éviter l'action sur un bouton-poussoir. Les détecteurs de type pyroélectrique semblent bien convenir dans cette application. Il s'agit de détecteurs sensibles au rayonnement infrarouge et constitués par un film de plastique thermosensible. Un tel détecteur délivre un signal électrique dont la forme et l'amplitude dépendent de la présence et du mouvement d'une personne dans le champ du détecteur.

On conçoit qu'avec un tel système il soit possible de déclencher automatiquement l'allumage d'un local, dès qu'une personne entre dans celui-ci. La personne n'a donc plus à appuyer sur un bouton-poussoir, ni à réappuyer en cas d'extinction.

Un tel dispositif est décrit par exemple dans le brevet des Etats-Unis d'Amérique n° 4 404 468. Un détecteur pyroélectrique de ce type est décrit notamment dans les demandes de brevets européens 0 218 056 et 0 218 057.

Bien que remédiant aux inconvénients évoqués plus haut, de tels systèmes présentent néanmoins encore un inconvénient qui est celui de nécessiter une source d'énergie apte à les alimenter.

La présente invention remédie à ce dernier inconvénient en proposant un système perfectionné qui est du genre des systèmes à minuterie tels que rappelés plus haut, et qui est complété par un dispositif de détection de personne qui se connecte de manière originale à l'ensemble à minuterie, de telle sorte qu'il ne soit pas nécessaire de prévoir de source d'alimentation spécifique ou supplémentaire. L'énergie électrique nécessaire au fonctionnement du détecteur et de l'électronique associée est extraite du dispositif à minuterie.

Avec le système de l'invention, l'éclairage de la source lumineuse est commandé par le détecteur dès qu'une personne entre dans le champ du détecteur, et, à la fin de la période d'éclairage déterminée par la minuterie, l'éclairage est maintenu ou réenclenché lorsque la personne se trouve encore dans les locaux à éclairer, cette situation étant détectée par le détecteur pyroélectrique.

Ainsi, le dispositif de l'invention évite-t-il aux utilisateurs d'avoir à appuyer une première fois sur le bouton-poussoir, puis une seconde fois lorsqu'ils sont surpris par l'extinction de l'éclairage après la fin de la temporisation.

De préférence, le détecteur de personne utilisé dans l'invention est un détecteur thermique.

De préférence encore, ce détecteur thermique est du type dit pyroélectrique.

De façon plus précise, le dispositif de commande de l'invention comprend, en plus d'un premier ensemble classique à minuterie, un deuxième ensemble autonome comprenant :
- un détecteur de personne relié à une première connexion d'entrée apte à recevoir une basse tension continue d'alimentation, et à une seconde connexion de sortie délivrant une tension de détection, ce détecteur étant dirigé vers le local à éclairer et étant sensible à la présence éventuelle d'une personne dans ce local,
- un circuit d'alimentation comprenant un transformateur ayant un primaire connecté aux deux bornes a, b du circuit de déclenchement de la minuterie et un secondaire relié à un circuit de redressement, ce circuit délivrant une basse tension appliquée sur la première connexion d'alimentation du détecteur,
- un circuit électronique relié au détecteur par la connexion de sortie et au circuit d'alimentation par la connexion d'alimentation, ce circuit assurant les fonctions d'amplification du signal délivré par le détecteur, de dérivation du signal amplifié et de temporisation, et délivrant finalement, sur une sortie, une impulsion de tension calibrée,
- un relais commandé par ladite impulsion de tension calibrée, ce relais étant apte à fermer un contact, lequel contact est connecté en parallèle sur les deux bornes a, b du circuit de déclenchement.

Par ces moyens, l'apparition d'une personne dans le local entraîne la détection de cette personne par le détecteur, l'actionnement du relais, la mise en court-circuit des bornes a, b, donc l'enclenchement de la minuterie et l'allumage de la source lumineuse.

La réapparition de la tension aux bornes a, b du circuit de déclenchement à la fin d'une période d'allumage de la source, provoque, en cas de présence prolongée de la personne dans le local, un nouvel établissement d'un court-circuit entre les bornes a, b, ce qui entraîne le redéclenchement de la minuterie et une nouvelle commande de l'éclairage et ainsi de suite, jusqu'à ce que la personne ait déserté le local.

De toute façon, les caractéristiques et avantages de l'invention apparaîtront mieux à la lumière de la description qui va suivre, qui est faite en liaison avec les dessins annexés.

Sur ces dessins :
- la figure 1, déjà décrite, représente un ensemble connu à bouton-poussoir et minuterie,
- la figure 2 représente le schéma synoptique du dispositif de l'invention,
- la figure 3 représente deux diagrammes temporels (a) et (b) illustrant le fonctionnement du dispositif de l'invention,
- la figure 4 montre un mode de réalisation d'un détecteur pyroélectrique pouvant être utilisé dans l'invention,
- la figure 5 illustre un schéma de réalisation d'un circuit électronique relié au détecteur pyroélectrique,
- la figure 6 est un diagramme temporel des différents niveaux de tension apparaissant en différents points du circuit électronique précédent,
- la figure 7 est un diagramme temporel de la commande du relais.

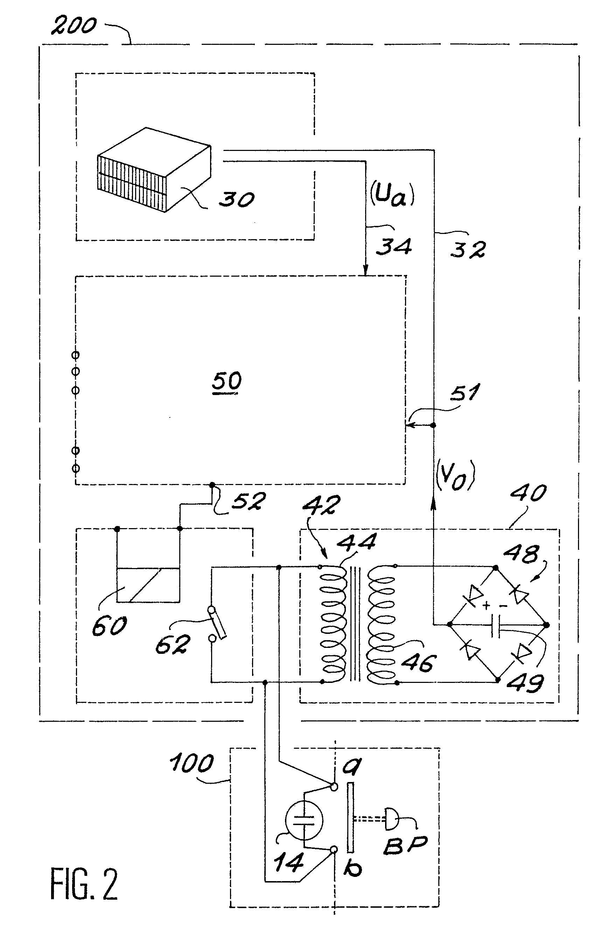

La figure 2 représente le schéma synoptique d'un dispositif selon l'invention. Ce dispositif comprend un premier ensemble 100, qui est un ensemble classique tel que celui qui a été décrit en liaison avec la figure 1 et qui n'est représenté ici que par ses bornes a et b, son bouton-poussoir BP (facultatif) et son voyant lumineux 14 ; selon l'invention, le dispositif comprend encore un second ensemble 200, qui est un ensemble autonome à détecteur pyroélectrique. De façon plus précise, ce second ensemble 200 comprend un détecteur pyroélectrique 30 dirigé vers le local à éclairer, ce détecteur recevant, sur une connexion 32, une tension d'alimentation VO et délivrant, sur une connexion de sortie 34, une tension de mesure Ua.

L'ensemble 200 comprend encore un circuit d'alimentation 40 comprenant un transformateur 42 dont le primaire 44 est connecté aux deux bornes a et b du circuit de déclenchement de la minuterie et le secondaire 46 à un circuit de redressement 48 comprenant un condensateur 49, et éventuellement un circuit de stabilisation non représenté ; ce circuit délivre une basse tension VO qui est appliquée sur la connexion 32 d'alimentation du détecteur 30.

L'ensemble 200 comprend encore un circuit électronique 50, qui reçoit la tension Ua délivrée par la connexion 34 et qui reçoit sur une entrée 51 la tension VO présente sur la connexion 32 ; ce circuit 50 assure les fonctions d'amplification du signal Ua délivré par le détecteur, de dérivation du signal amplifié et de temporisation ; il délivre finalement, sur une sortie 52, une impulsion de tension calibrée.

L'ensemble 200 comprend enfin un relais 60 commandé par l'impulsion de tension calibrée délivrée par la sortie 52 ; ce relais est apte à fermer un contact 62, lequel contact est connecté en parallèle sur les bornes a et b du premier ensemble 100.

Si le bouton-poussoir BP est représenté sur la figure 2, bien qu'il ne soit pas nécessaire dans la présente invention, c'est uniquement pour indiquer que l'invention permet de perfectionner des installations déjà existantes qui comprennent un tel bouton-poussoir, ce dernier pouvant être conservé. Naturellement, s'il advient une défaillance du système de détection pyroélectrique, le bouton-poussoir retrouve son utilité, le dispositif redevenant alors un moyen classique de commande de l'allumage.

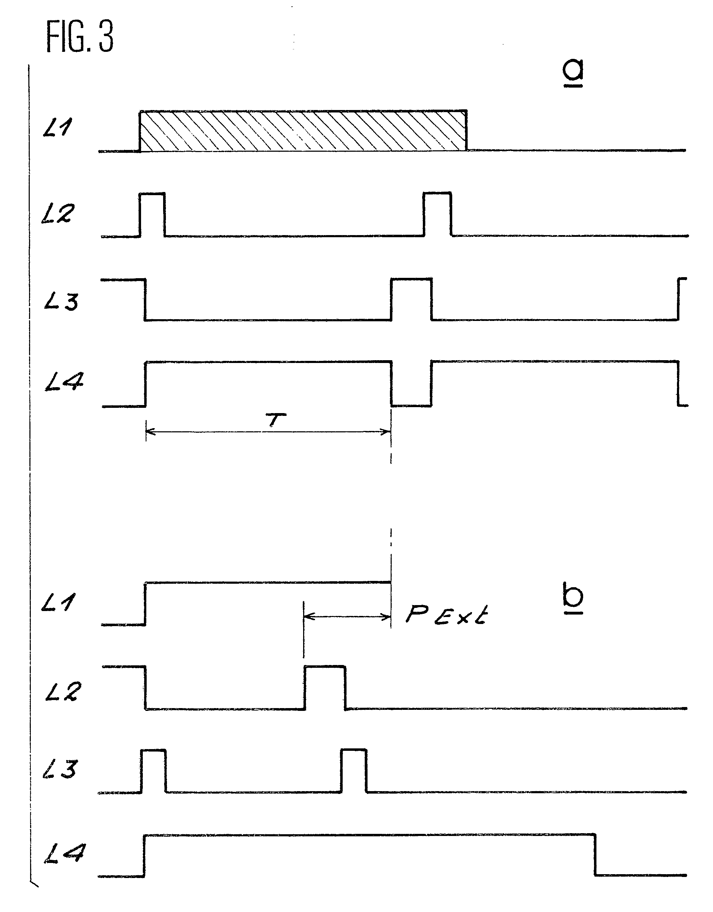

Le fonctionnement du dispositif de l'invention peut être décrit à l'aide des diagrammes de la figure 3, qui correspondent aux cas d'une minuterie simple (diagramme a) et d'une minuterie à préavis d'extinction (diagramme b).

Sur la partie a de ces diagrammes la ligne L1 représente schématiquement l'intervalle de temps pendant lequel une personne est présente dans le faisceau du détecteur pyroélectrique. Le niveau haut du signal correspond à une présence et le niveau bas à une absence.

La ligne L2 montre la position du relais de court-circuit 60-62. La fermeture du relais dure entre 0,2 et 0,9s.

La ligne L3 représente l'état du voyant 14 associé aux bornes a et b ; le niveau haut indique un voyant allumé et le niveau bas un état éteint. On voit qu'après un temps de réponse court, de l'ordre de 0,1s, le voyant du bouton, qui était allumé avant l'arrivée d'une personne dans le champ du détecteur, se trouve éteint. Il n'existe plus alors de tension disponible aux bornes a et b.

La ligne L4 représente l'éclairage du local ; l'état allumé correspond au niveau haut et l'état éteint au niveau bas. L'éclairage subsiste pendant la durée T définie par la minuterie, laquelle est par exemple de 1 à 7 minutes.

Lorsque l'éclairage s'éteint, le voyant du bouton se trouve simultanément allumé, autrement dit une tension est à nouveau disponible aux bornes a et b. Mais une inhibition de l'ordre de 1s est prévue au-delà de laquelle le cycle peut se reproduire.

Si la personne avait quitté le local avant la fin de la durée T de la minuterie, la deuxième impulsion de la ligne L2 serait absente et l'éclairage resterait éteint.

Cet exemple correspond au cas où la minuterie est dite "simple". L'éclairage du local ne s'est trouvé interrompu que pendant environ 1s.

Le diagramme de la partie b de la figure 3 montre l'évolution de différents signaux dans le cas d'une minuterie dite "à préavis d'extinction". Sur la ligne L1 on trouve l'éclairage du palier, avec les mêmes conventions que précédemment, mais avec l'indication d'un préavis d'extinction $P_{Ext}$.

Sur la ligne L2 est représenté l'état allumé ou éteint du voyant du bouton-poussoir. La tension redevient disponible dès que l'on atteint le début du préavis d'extinction.

Sur la ligne L3 est illustrée la position du relais 60-61 de court-circuit.

Enfin, sur la ligne L4 on voit l'éclairage du palier obtenu définitivement.

Dans ces conditions, après une période d'inhibition de l'ordre d'une seconde, le relais de court-circuit est à nouveau activé, ce qui réenclenche la minuterie mais, contrairement au cas a, sans interruption de l'éclairage du local.

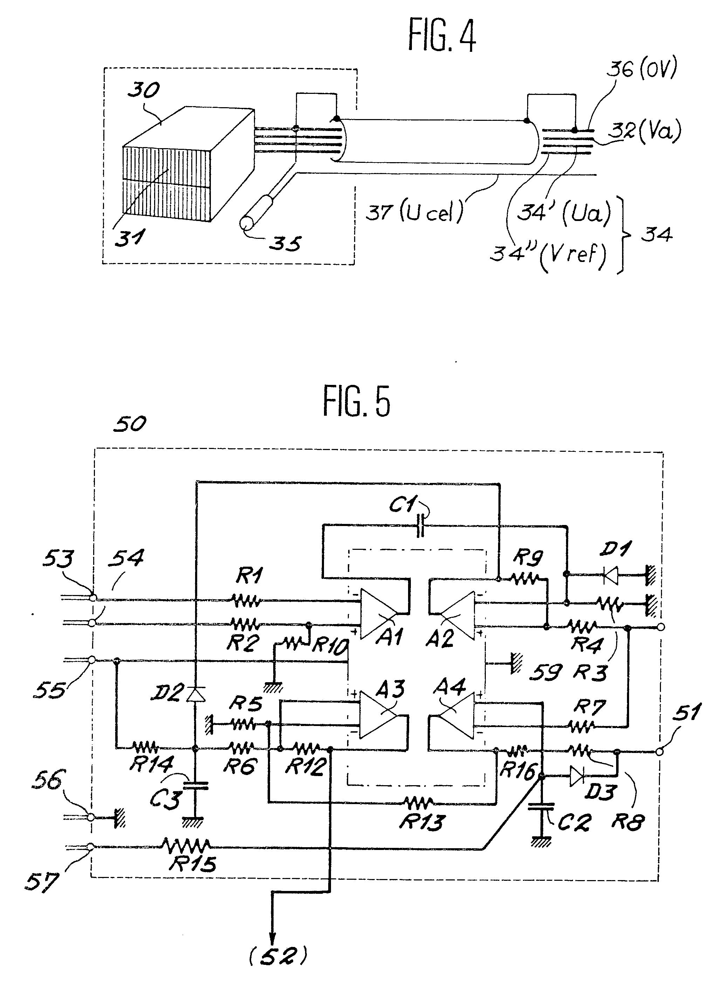

La figure 4 représente de manière plus détaillée un détecteur pyroélectrique utilisable dans l'invention. Ce détecteur comporte un boîtier 30 muni d'une fenêtre 31 dirigée vers le local à éclairer, et diverses connexions électriques dont une connexion de masse 36, une connexion d'entrée 32 permettant d'appliquer la tension VO, une connexion 34' délivrant une tension de mesure Ua, une connexion 34" délivrant une tension de référence Uref.

Par ailleurs, la figure 4 montre une cellule photorésistante 35 dirigée vers le local à surveiller. Cette cellule est reliée, d'une part, à la masse et, d'autre part, à une connexion de sortie 37 délivrant une tension Ucel.

La figure 5 montre un exemple de réalisation du circuit 50 de la figure 2. Le circuit représenté remplit cinq fonctions essentielles :
- amplification du signal Ua délivré par le détecteur,
- dérivation du signal amplifié afin de ne retenir que les variations liées à l'approche d'une personne et non à son éloignement,
- temporisation, afin de commander la minuterie pendant un temps supérieur au temps minimum généralement admis par les constructeurs et qui est de l'ordre de 0,1s ; le vieillissement des minuteries électromécaniques ayant pour conséquence d'augmenter ce temps, une valeur comprise entre 0,2 et 0,9s a été retenue,
- inhibition de la commande alors que la tension d'alimentation n'a pas atteint sa valeur nominale ; cette fonction évite tout déclenchement intempestif au moment où la tension réapparaît aux bornes a et b du circuit, c'est-à-dire, précisément, en fin de temporisation,
- commande du relais actionnant la minuterie par la tension délivrée par la connexion de sortie 52.

Ces fonctions peuvent être remplies à partir d'un circuit intégré à faible consommation, comme par exemple le circuit intégré analogique du type LM 324, associé à des diodes, à des résistances et à des condensateurs.

On pourrait utiliser également un circuit intégré logique comprenant quatre portes du type ET-inverseur, à déclencheur de Schmitt en technologie CMOS (genre 4093) ou TTL-LS (genre 74 LS 132) ; ce circuit est associé à des diodes résistances et condensateurs selon des schémas connus. Dans le cas de la technologie CMOS, la fonction de commande du relais doit être effectuée à partir d'un transistor qui amplifie le faible courant de sortie de la porte logique.

On peut encore utiliser un circuit intégré logique comportant six inverseurs à déclencheurs de Schmitt en technologie CMOS (genre 4584 ou 40106) ou TTL-LS (genre 74 LS 14) dans les conditions évoquées plus haut.

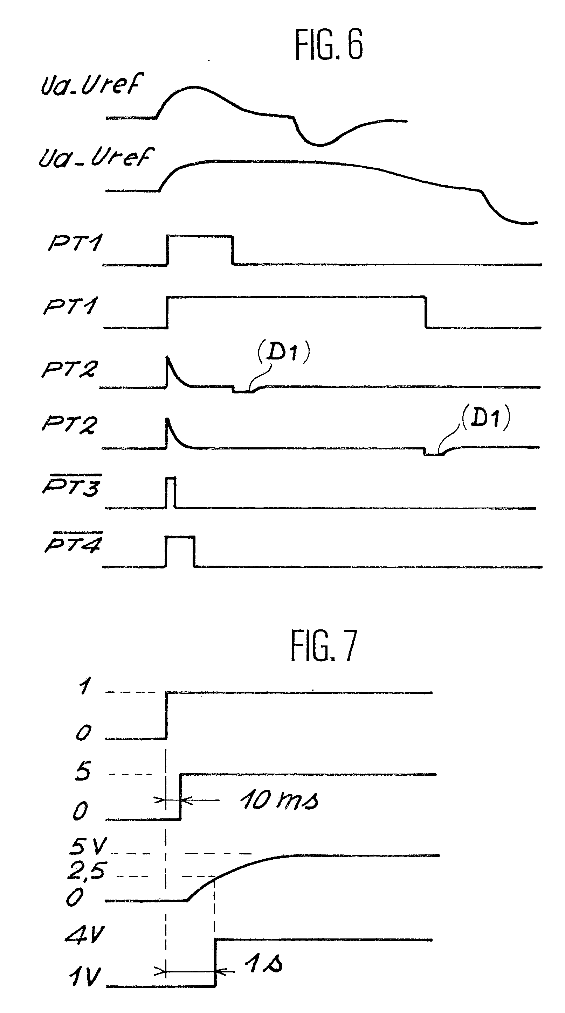

Dans la variante illustrée sur la figure 5, on utilise un circuit de type LM 324 comprenant quatre amplificateurs A1, A2, A3 et A4, ce circuit étant relié à 3 diodes D1, D2, D3, à 15 résistances R1 à R15, et 3 condensateurs C1, C2 et C3. Les tensions apparaissant en divers points PT1, PT2, PT3, PT4 sont représentées sur le diagramme temporel de la figure 6.

Sur ce diagramme, la première ligne représente un exemple de variation de la différence de tension Ua-Uref dans le cas du déplacement rapide d'une personne dans le champ du détecteur et la seconde ligne un exemple de variation de la même différence de tension dans le cas d'un déplacement lent. Dans le premier cas, la durée minimum observée est de l'odre de 0,2s et dans le second la valeur maximum observée est de l'odre de 5s.

Sur la troisième ligne, on voit la variation du potentiel au point PT1 dans le cas d'un déplacement rapide.

Sur la quatrième ligne, on voit la variation du potentiel au même point PT1 dans le cas d'un déplacement lent.

Sur la cinquième ligne du diagramme, on voit la variation du potentiel du point PT2 ; ce signal est la dérivée des signaux de la troisième ligne.

De la même manière, à la sixième ligne, on voit la tension dérivée du signal de la quatrième ligne rencontré dans le cas d'un déplacement lent.

Sur ces cinquième et sixième lignes, la limitation de la tension correspondant au front descendant des impulsions dont elle dérive est obtenue par la diode D1.

Sur l'avant-dernière ligne on voit le complément du potentiel au point PT3 qui résulte de l'amplification du signal dérivé. La largeur de l'impulsion obtenue est inférieure à 0,1s et peut être par exemple de l'ordre de 60ms.

Sur la dernière ligne, enfin, on voit le complément du potentiel apparaissant au point PT4, qui traduit la fonction de temporisation. L'impulsion obtenue est de l'ordre de 0,2 à 0,9s.

Les deux tableaux suivants donnent des valeurs numériques qui peuvent être utilisées pour les résistances R1 à R15 et pour les trois condensateurs C1, C2, C3. Il va de soi que ces valeurs ne sont données qu'à titre explicatif. Les résistances sont données en Ohms et les capacités en µF. Quant aux diodes D1, D2, D3, il peut s'agir de diodes du type 1N 914.


### TABLEAU DES RESISTANCES (en Ohms)

| R1 | 5 k |
|----|-----|
| R2 | 5 k |
| R3 | 100 k |
| R4 | 100 k |
| R5 | 100 k |
| R6 | 100 k |
| R7 | 100 k |
| R8 | 100 k |
| R9 | 0,3 M |
| R10 | 100 k |
| R11 | 0,5 |
| R12 | 0,5 M |
| R13 | 50 k |
| R14 | 50 k |


### TABLEAU DES CONDENSATEURS (en microFarads)

| C1 | 1 |
|----|---|
| C2 | 22 |
| C3 | 22 |

Le diagramme temporel de la figure 7 représente la commande du relais 60. Sur la première ligne, on voit la présence de la tension de secteur (par exemple 220 V) aux bornes du primaire du transformateur 42, après une absence suffisamment longue pour que le condensateur 49 soit déchargé.

Sur la deuxième ligne, on voit la tension régulée, par exemple de 5 V, qui apparaît à la sortie du circuit 40 et qui est légèrement décalée, de l'ordre de 10ms, par rapport au front de montée traduisant la présence de la tension à 220 V sur le primaire du transformateur.

Sur les troisième et quatrième lignes on voit la variation du potentiel aux points PT5 et PT6 du circuit de la figure 5. Si PT6 = 1 V, alors PT7 = +4 V et la commande du relais est impossible. Si PT6 = 4 V, alors PT7 = PT4 et la commande du relais est possible.

Le dispositif qui vient d'être décrit n'entraîne pas un nombre de déclenchements supérieur à celui qui est occasionné par l'action du bouton-poussoir lorsqu'il fonctionne dans une zone obscure tout au long de la journée. Mais dans une zone ensoleillée, telle qu'une zone palière avec fenêtre, il peut présenter l'inconvénient de commander l'éclairage et de créer ainsi une dépense en énergie qui va à l'encontre de l'objectif d'économie visé par l'utilisation d'une minuterie.

Dans une variante de réalisation illustrée sur les figures 4 et 5, une cellule photorésistante 35, dont la résistance varie de façon classique de plusieurs mégohms à quelques centaines d'ohms en présence de la lumière ambiante, est placée soit à l'intérieur, soit à l'extérieur du détecteur pyroélectrique 30. On utilise cette variation de résistance pour inhiber le dispositif de commande de minuterie, par exemple en connectant la cellule par l'intermédiaire d'une résistance R15 de réglage de sensibilité au point PT5 : si la tension définie par le pont de résistance R8/Rcellule + R15 est inférieure à Uref (environ 2,5 V), alors PT6 est voisin de 1 V et la commande du relais est impossible.

Le relais 60 peut être un relais à faible puissance de commande et à pouvoir de coupure compatible avec le courant de commande d'une minuterie ; celui-ci doit pouvoir être supérieur à 100 mA sous 220 V. Une résistance peut être intercalée afin de limiter ce courant à une valeur compatible avec le pouvoir de coupure du relais. Le relais assure également l'isolement entre le dispositif et la minuterie. Le relais peut être du type électromécanique ou à lames souples dans une ampoule scellée. Dans ce dernier cas, le fort pouvoir de coupure peut être obtenu avec des contacts mouillés au mercure.

La minuterie M peut être de tout type connu :
- électromécanique à relais et mécanisme d'horlogerie comme dans l'exemple décrit,
- mais aussi électromécanique à moteur ou électronique.


### Revendications

1. Dispositif de commande de l'éclairage de locaux, comprenant un premier ensemble (100) constitué par :
- une minuterie (M) définissant une période de temps,
- un circuit (N, a, b, 4, E, 5, 1, e, c, 2, P) de déclenchement de

la minuterie comprenant deux bornes (a, b) normalement en circuit ouvert, ce circuit recevant une tension d'alimentation (P, N),

- deux contacts (e, c) mis en circuit ouvert dès que la minuterie est déclenchée, ce qui interrompt la continuité du circuit de déclenchement de la minuterie, et remis en court-circuit à la fin de la période définie par la minuterie,

- un circuit (N, L, 6, d, c, 2, P) d'alimentation d'une source lumineuse (L), ce circuit contenant deux contacts (c, d) dont la position est commandée par la minuterie (M), ces contacts (c, d) étant fermés pendant la période définie par la minuterie, ce qui assure la commande de l'éclairage pendant cette période, et étant ouverts en dehors de cette période, ce qui interrompt l'éclairage et rétablit la tension d'alimentation entre les bornes (a, b),

ce dispositif étant caractérisé par le fait qu'il comprend en outre un second ensemble autonome (200) comprenant :

- un détecteur de personne (30) relié à une première connexion d'entrée (32) apte à recevoir une basse tension continue d'alimentation, et à une seconde connexion de sortie (34) délivrant une tension de détection (Ua), ce détecteur (30) étant dirigé vers le local à éclairer et étant sensible à la présence éventuelle d'une personne dans ce local,

- un circuit (40) d'alimentation comprenant un transformateur (42) ayant un primaire (44) connecté aux deux bornes (a, b) du circuit de déclenchement de la minuterie et un secondaire (46) relié à un circuit de redressement (48), ce circuit délivrant une basse tension (VO) appliquée sur la première connexion (32) d'alimentation du détecteur (30),

- un circuit électronique (50) relié au détecteur (30) par la connexion de sortie (34) et au circuit d'alimentation (40) par la connexion (32), ce circuit (50) assurant les fonctions d'amplification du signal (Ua) délivré par le détecteur, de dérivation du signal amplifié et de temporisation, et délivrant finalement, sur une sortie (52), une impulsion de tension calibrée,

- un relais (60) commandé par ladite impulsion de tension calibrée, ce relais étant apte à fermer un contact (62), lequel contact est connecté en parallèle sur les deux bornes (a, b) du circuit de déclenchement,

l'apparition d'une personne dans le local entraînant la détection de cette personne par le détecteur (30), l'actionnement du relais (60), la mise en court-circuit des bornes (a, b) donc l'enclenchement de la minuterie et l'allumage de la source lumineuse (L), la réapparition de la tension aux bornes (a, b) du circuit de déclenchement à la fin d'une période d'allumage de la source, provoquant, en cas de présence prolongée de la personne dans le local, l'établissement à nouveau d'un court-circuit entre les bornes (a, b), ce qui entraîne le redéclenchement de la minuterie et une nouvelle commande de l'éclairage et ainsi de suite, jusqu'à ce que la personne ait déserté le local.

2. Dispositif selon la revendication 1, caractérisé par le fait que le détecteur est du type thermique.

3. Dispositif selon la revendication 2, caractérisé par le fait que le détecteur est du type pyroélectrique.

4. Dispositif selon la revendication 1, caractérisé par le fait qu'il comprend en outre une cellule photorésistive (35) dirigée vers le local à éclairer et reliée au circuit électronique (50) en un point (PT5) où la tension produite lorsque la résistance de la cellule est faible en cas d'éclairement ambiant intense, est capable d'inhiber le circuit.

FIG. 1

FIG. 2

FIG. 3

# FIG. 4

# FIG. 5

# FIG. 6

Ua_Uref

Ua_Uref

PT1

PT1

PT2     (D1)

PT2                 (D1)

$\overline{PT3}$

$\overline{PT4}$

# FIG. 7

1

0

5

0     10 ms

5V

2,5

0

4V

1V     1s

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WO-A-8 505 753  (ROBOTRONICS)<br>--- | | H 05 B   37/02 |
| A | US-A-4 225 808  (SARACENI)<br>--- | | |
| A | US-A-4 461 977  (PIERPOINT)<br>----- | | |

DOMAINES TECHNIQUES RECHERCHES (Int. Cl.4)

H 05 B   37/00

Le présent rapport a été établi pour toutes les revendications

| Lieu de la recherche | Date d'achèvement de la recherche | Examinateur |
|---|---|---|
| LA HAYE | 29-09-1988 | BERTIN M.H.J. |